# EUROPEAN PATENT SPECIFICATION

(11) **EP 2 691 183 B1**
(45) Date of publication and mention of the grant of the patent: **12.12.2018**
(21) Application number: 12712406.3
(22) Date of filing: 27.03.2012
(51) Int. Cl.: B05B 1/02, B05B 1/06, B05B 1/14, B05B 1/34, B05B 7/10, A23P 20/18, A23P 20/15, B05B 14/40, A23B 4/30, B05B 7/04, A23L 13/70, B05B 16/00

(54) **SPRAY NOZZLE**
SPRÜHKOPF
TÊTE DE PULVÉRISATION

(30) Priority: 28.03.2011 NL 2006480; 16.09.2011 NL 2007431
(43) Date of publication of application: 05.02.2014
(73) Proprietor: Marel Meat Processing B.V., 5349 AE Oss (NL)
(72) Inventor: VAN HAPPEN, Frank-Willem Johan Martin, 5854 EB Nieuw-Bergen (NL)
(74) Representative: Patentwerk B.V.
(86) International application number: PCT/NL2012/050199
(87) International publication number: WO 2012/134282

(56) References cited:
- EP-A1- 0 855 563
- EP-A2- 1 767 277
- WO-A2-2005/107481
- WO-A2-2008/001301
- BE-A- 684 783
- DE-A1- 3 417 031
- FR-A1- 2 947 191
- GB-A- 2 325 391
- GB-A- 190 226 158
- US-A- 2 791 508
- US-A- 5 372 312
- US-A- 6 161 778
- US-A1- 2003 031 770
- US-A1- 2005 003 062
- US-A1- 2006 180 682
- HUND ET AL: "Spray application processes", METAL FINISHING, ELSEVIER, NEW YORK, NY, US, vol. 98, no. 6, 1 January 2000 (2000-01-01), pages 181-197, XP022574530, ISSN: 0026-0576

## Description

The invention relates to a spray nozzle for spraying a liquid consumable medium according the preamble of claim 1.

Envisaged in the first instance in respect of spraying a liquid consumable medium and at least partially coating food parts with a liquid consumable medium is the spraying and applying of a food product-enriching layer, such as a liquid with desired additives. This can for instance be a marinade (optionally provided with solid ingredients such as herbs incorporated therein), a liquid-borne herb mixture, a salty liquid, a crust compound, a foam additive and so on. The only requirement set for the additive in the context of the present invention is that it must be liquid to an extent such that it can be pumped and mixed with air. It has already been expressly stated that the additive which can be pumped and mixed with an airflow can also be provided in this context with solid constituents of varying nature.

The international patent application WO 2008/001301 discloses a sprayhead apparatus for generating a gas-assisted droplet spray for use in oral cleaning. The sprayhead as disclosed is provided with a housing connected to a liquid line and plural gas feed openings such that a liquid stream is breaking up in the housing to form a spray of droplets. The outlet of the housing is embodied as a duct which may be made from a moldable plastic, and more specific for minimizing the adherence of liquid to the duct wall a material such as Teflon or a coating with a fluoride component are preferred.

US patent 6,161,778 relates an air atomising nozzle assembly with improved air cap. A nozzle body has a liquid inlet passage and a gas inlet passage and an impingement element is deflecting the liquid stream in a radially outward direction to provide atomisation of the liquid in a well defined spray pattern.

Spraying of a liquid consumable medium has heretofore been problematic, and coating of food parts generally takes place in automated production by carrying the food parts through a bath with a conveyor. It is thus possible to realize a reasonable to good coating, although a significant drawback is that excess additive adhering to the food parts and the additive carried along by the transport means contaminates the surrounding area, and the passage through a bath moreover makes for a greater consumption of additive than is required for coating the food parts.

The present invention has for its object to provide means with which a liquid consumable medium becomes sprayable without adverse consequences for the medium, and with which the food parts can be at least partially coated with a liquid consumable medium in a more controlled manner than according to the prior art and/or with which the prior art drawbacks can be reduced.

The present invention provides for this purpose a spray nozzle for at least partially coating food parts by means of spraying a liquid consumable medium, according claim 1. The spray nozzle thus functions as an internal mixer; the liquid consumable medium is mixed with the air internally, and so in a very controlled manner, without being excessively impacted. The liquid consumable medium is carried more or less gradually into the gas flow by the vortex. It is desirable for this purpose for the vortex-generating air supply to comprise at least one air channel debouching tangentially in the mixing chamber. Owing to the flexible wall part it becomes possible that, when the passage opening is temporarily blocked (for instance as a result of a solid ingredient of a determined size present in the liquid medium), as a result of which the pressure in the mixing chamber increases, the flexible wall part deforms elastically such that the passage opening and/or the slot allows the blocking ingredient to pass through. The pressure will then decrease again to normal proportions, and the flexible wall will return to its starting position. At least one slot is arranged in the elastically deformable material such that in case of a temporary blockage of the slot a pressure develops, as a result of which the slot is then unblocked and the fluid once again passes through the slot as a result of the elastic deformation of the deformable material. Combinations of one or more slots with one or more passage openings are also possible.

The form of the passage opening will be described in more detail hereinbelow. The spray nozzle according to the present invention is particularly suitable for spraying a fluid consisting of multiple components. It is also possible here to have the mixing of the individual components take place in the mixing chamber. It is desirable that the fluids consist of at least one gaseous component and of at least one liquid. The size of droplets to be formed can be partly controlled by selecting a determined gas pressure, while the pattern in which the droplets are then sprayed will be determined more by the design of the at least one passage opening in the flexible wall part and by the choice of material and the dimensioning of the at least one passage opening in the flexible wall part. It is also noted that the spray nozzle can also be utilized to mix multiple liquid media before they are sprayed.

In another variant of the spray nozzle the flexible wall part in which a passage opening is arranged is releasable from the other part of the spray nozzle. This is for instance possible by embodying the flexible wall part such that it is easily removable, preferably without the other part of the spray nozzle having to be detached for this purpose. The flexible wall part can for instance be clamped by means of a ring against a part of the housing of the spray nozzle, or the flexible wall part can be mounted with clamping fit on the housing of the spray nozzle. It is thus possible to replace the flexible wall part in the case of wear or maintenance. It is also possible to change the spray pattern (i.e. the distribution of the mixture of liquid medium and air by the spray nozzle) by selecting a specific form of a passage opening (or passage openings) in a flexible wall part. The flexible wall part will usually be provided with a central passage opening, the centre of which coincides with the axial through the mixing chamber, and it is also possible for the flexible wall part to be provided with a central passage opening having an elongate form. This results in differing spray patterns. This will be further elucidated on the basis of a number of embodiments shown in the figures. A further description of the function of the passage opening is given elsewhere in this text.

Yet another modification of the flexible wall part entails the passage opening in the flexible wall part being provided with at least one opening located at a distance from the axial through the mixing chamber. With such an opening - or more specifically with a ring of such openings - at a distance from the axial through the mixing chamber it is possible to counter a local underpressure in the mixing chamber close to the flexible wall part at a distance from a central passage opening; the result is therefore that the liquid consumable medium is subjected to less (under)pressure and that undesired turbulence is also prevented. It is also noted here that it is possible to provide the flexible wall part not with a central passage opening but with one or more non-centrally arranged openings or a (partially) annular or elongate opening.

Suitable materials for manufacturing the flexible wall part are materials which are flexible at room temperature, such as elastically deformable materials which deform under the influence of pressures as applied in spray nozzles for liquid consumable medium. Pressures of [0.1 - 0.4] atmosphere gas pressure must be envisaged here. The material must further comply with requirements set for processing of a consumable medium, and must in addition have a sufficiently long lifespan. Examples of suitable materials are silicones, synthetic rubbers and determined polymers (and mixtures thereof). For strengthening purposes a reinforcement in the form of for instance fibres or fabrics can for instance also be arranged in the flexible material in an optionally structurally arranged composition. It is on the other hand also possible to envisage other strengthening structures, such as for instance stainless steel support elements.

An axial feed for liquid consumable medium connecting on the inlet side to the mixing chamber can have a truncated cone shape narrowing toward the mixing chamber, preferably with a wall which is embodied substantially as one whole. Such a feed offers relatively little resistance and resists contamination.

The present invention will be further elucidated on the basis of the non-limitative exemplary embodiments shown in the following figures. Herein:
figure 1 is a perspective view of a spray nozzle according to the present invention;
figure 2 is a perspective view of the spray nozzle of figure 1 in exploded state;
figure 3 shows a cross-section through the spray nozzle of figure 1; and
figures 4A and 4B are front views of a number of embodiment variants of flexible wall parts as can be applied in the spray nozzle according to the present invention.

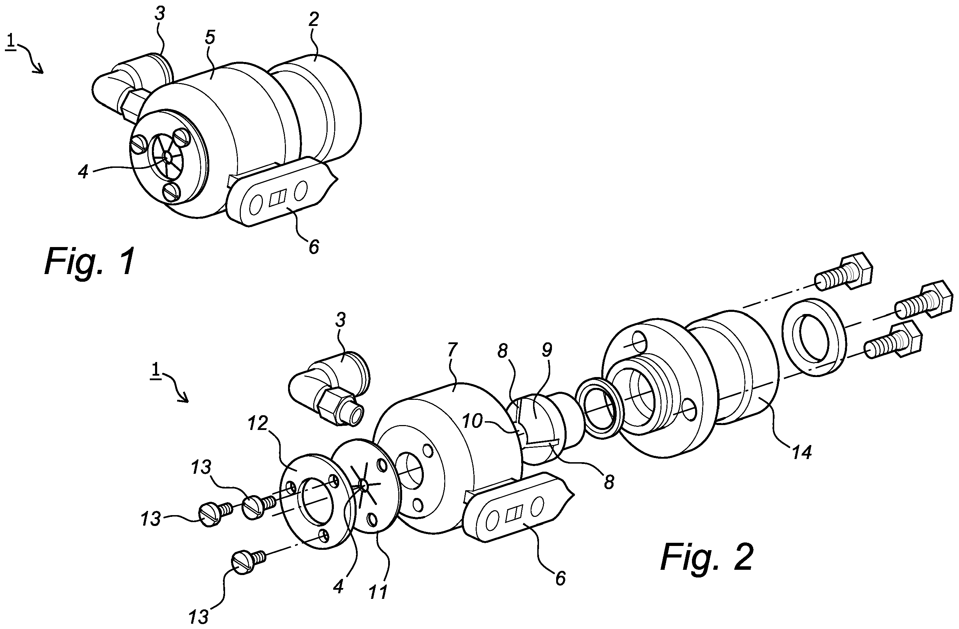

Figure 1 shows a spray nozzle 1 with an inlet side 2 for liquid consumable medium, a connection 3 for the supply of air and an outlet opening 4 for consumable medium mixed with air. Spray nozzle 1 is provided with a housing 5 which can be mounted using a bracket 6.

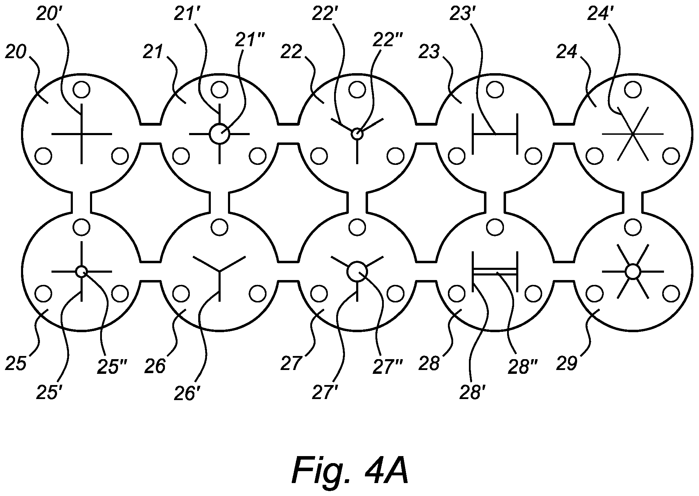

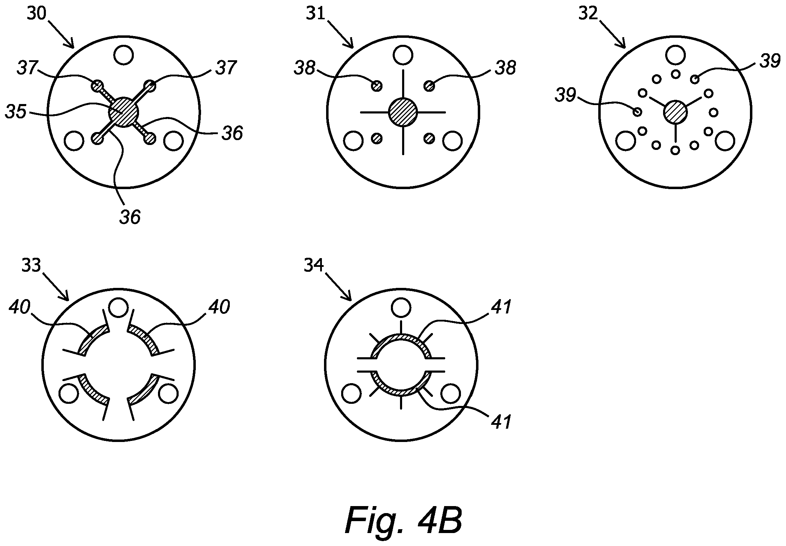

Figure 2 shows an exploded view of spray nozzle 1. A central part 7 of housing 5 encloses the mixing chamber (not visible here) for mixing the liquid consumable medium with an airflow. Air supply 3 connects for this purpose to air channels 8 which debouch tangentially in the mixing chamber and are recessed into a cone 9 with a central passage 10 for the consumable medium. Air channels 8 generate a vortex in the mixing chamber, which results in a good mixing of the air and the liquid medium so that this mixture can be readily sprayed. Outlet opening 4 is arranged in a flexible wall part 11 fixed with a ring 12 and bolts 13 to central part 7 of housing 5. In addition to the central outlet opening 4, other openings are also arranged in flexible wall part 11, which will be further elucidated with reference to figure 4. Flexible wall part 11 bounds the mixing chamber on the outlet side. Cone 9 with central passage 10 for the consumable medium and the air channels 8 debouching tangentially in the mixing chamber are supported by a holder part 14 likewise forming part of spray nozzle housing 5. Spray nozzle 1 can also take a simpler form with a core consisting of a single component.

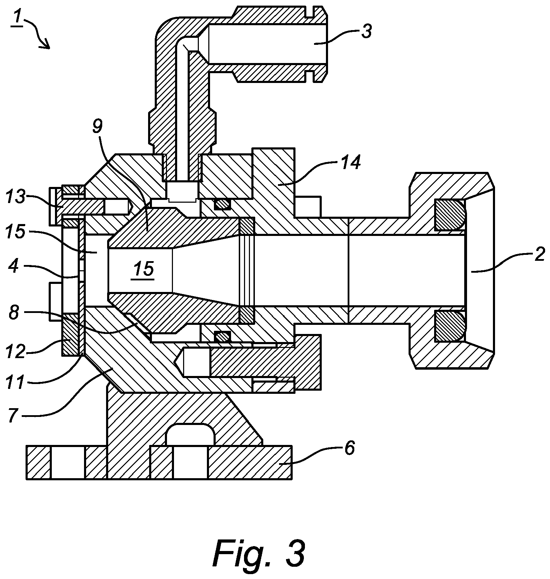

Figure 3 also shows spray nozzle 1, though here in a cross-section, whereby a mixing chamber 15 is now also clearly visible here in addition to the components already mentioned with reference to the foregoing two figures.

Figure 4A shows ten flexible wall parts 20-29 for bounding a mixing chamber of a spray nozzle according to the present invention. It is possible to opt for a determined variant subject to the process conditions and the desired spray pattern. It is noted here that the variants show here only show a limited number of options; numerous other variations can be envisaged. In respect of the embodiments shown in figure 4A, they can be advantageous in specific conditions. When compared to flexible wall part 20 with a cross-shaped passage 20', the flow rate advantageously allowed through by flexible wall part 25, with a cross-shaped passage 25' in which a central opening 25" is arranged, will probably be higher and/or it is possible with flexible wall part 25 to spray a liquid medium in which more or larger solid ingredients are present. For the flexible wall part 21 with a cross-shaped passage 21' in which a still larger central opening 21" is arranged, the flow rate and/or the ingredients present in the medium can in turn be higher and/or more numerous. Flexible wall part 22 with Y-shaped passage 22' and central opening 22", flexible wall part 26 with Y-shaped passage 26' and wall part 27 with Y-shaped passage 27' and a larger central opening 27" make it possible for the spray pattern which can be generated therewith to again have different characteristics than in is the case with wall parts 20, 25 and 21. These can thus be varied depending on the conditions of use (flow rate, viscosity, quantity and size of solid ingredients, desired spray pattern and so on) in order to arrive at the best possible solution. Flexible wall part 23 with an H-shaped passage 23' and flexible wall part 28 with an H-shaped passage 28' provided with a rectangular central opening 28' will particularly be applied when there is a need for a wider spray pattern than can be realized with the above mentioned flexible wall parts 20, 21, 22, 25, 26 and 27. It is expected that flexible wall part 24 with a star-shaped passage 24' and flexible wall part 29 with a star-shaped passage 29' provided with central opening 29' will offer less resistance to the passage of consumable medium than for instance wall parts 22 and 26 with Y-shaped passages 22' and 26'.

Figure 4B shows a number of other flexible wall parts 30-34. The flexible wall part 30 thus has a central opening 35 which is connected by means of radial slots 36 to four smaller peripheral openings 37. Flexible wall part 31 and 32 are also provided with smaller peripheral openings 38, 39. The advantage of applying peripheral openings 37, 38, 39 is that underpressure in the mixing chamber (see for instance figure 3) at a distance from a central opening in a flexible wall part can thereby be prevented or reduced so that less turbulence is created. Flexible wall parts 33 and 34 do not have a central opening but are provided with respectively four and two elongate peripheral outflow openings 40, 41.

## Claims

1. Spray nozzle (1) for at least partially coating food parts by means of spraying a liquid consumable medium, comprising:
- a mixing chamber (15) for mixing the liquid consumable medium with an airflow,
- an air supply (3) connecting on an inlet side (2) to the mixing chamber (15),
- a feed for liquid consumable medium likewise connecting on the inlet side (2) to the mixing chamber (15),
- an outlet side of the mixing chamber (15) differing from the inlet side (2),
**characterised in that** the air supply (3) is a vortex-generating air supply and the outlet side of the mixing chamber (15) is bounded at least partially by a flexible wall part (11) in which at least one passage opening and at least one slot are arranged for the mixture of liquid consumable medium and air.

2. Spray nozzle as claimed in claim 1, **characterized in that** the vortex-generating air supply (3) comprises at least one air channel (8) debouching tangentially in the mixing chamber (15).

3. Spray nozzle as claimed in claim 1 or 2, **characterized in that** the flexible wall part (11) with the at least one passage opening and the at least one slot is releasable.

4. Spray nozzle as claimed in any of the claims 1-3, **characterized in that** the flexible wall part (11) is provided with a central passage opening, the centre of which coincides with the axial through the mixing chamber (15).

5. Spray nozzle as claimed in any of the claims 1-4, **characterized in that** the flexible wall part (11) is provided with a central passage opening having an elongate form.

6. Spray nozzle as claimed in any of the claims 1-5, **characterized in that** the passage opening in the flexible wall part (11) is provided with at least one opening located at a distance from the axial through the mixing chamber (15).

## Patentansprüche

1. Sprühkopf (1) zum zumindest teilweisen Beschichten von Lebensmittelteilen mittels Versprühen eines flüssigen konsumierbaren Mittels, umfassend:
- eine Mischkammer (15) zum Vermischen des flüssigen konsumierbaren Mittels mit einem Luftstrom,
- eine Luftversorgung (3), die auf einer Einlassseite (2) mit der Mischkammer (15) verbunden ist,
- einen Zulauf für ein flüssiges konsumierbares Mittel, das ebenfalls auf der Einlassseite (2) mit der Mischkammer (15) verbunden ist,
- wobei sich eine Auslassseite der Mischkammer (15) von der Einlassseite (2) unterscheidet,
**dadurch gekennzeichnet, dass** die Luftversorgung (3) eine Wirbel erzeugende Luftversorgung ist und die Auslassseite der Mischkammer (15) zumindest teilweise durch einen flexiblen Wandteil (11) begrenzt wird, in dem mindestens eine Durchgangsöffnung und mindestens ein Schlitz für das Gemisch aus dem flüssigen konsumierbaren Medium und Luft angeordnet sind.

2. Sprühkopf nach Anspruch 1, **dadurch gekennzeichnet, dass** die Wirbel erzeugende Luftversorgung (3) mindestens einen Luftkanal (8) umfasst, der tangential in der Mischkammer (15) mündet.

3. Sprühkopf nach Anspruch 1 oder 2, **dadurch gekennzeichnet, dass** der flexible Wandteil (11) mit der mindestens einen Durchgangsöffnung und dem mindestens einen Schlitz lösbar ist.

4. Sprühkopf nach einem der Ansprüche 1-3, **dadurch gekennzeichnet, dass** der flexible Wandteil (11) mit einer mittleren Durchgangsöffnung versehen ist, deren Mitte mit der Axialen durch die Mischkammer (15) zusammenfällt.

5. Sprühkopf nach einem der Ansprüche 1-4, **dadurch gekennzeichnet, dass** der flexible Wandteil (11) mit einer mittleren Durchgangsöffnung versehen ist, die eine längliche Form aufweist.

6. Sprühkopf nach einem der Ansprüche 1-5, **dadurch gekennzeichnet, dass** die Durchgangsöffnung in dem flexiblen Wandteil (11) mit mindestens einer Öffnung versehen ist, die sich in einem Abstand von der Axialen durch die Mischkammer (15) befindet.

## Revendications

1. Buse de pulvérisation (1) pour l'enrobage au moins partiel de parties d'aliments au moyen de la pulvérisation d'une substance comestible liquide, comprenant :
- une chambre de mélange (15) servant à mélanger la substance comestible liquide avec un flux d'air,
- une alimentation en air (3) raccordée d'un côté d'entrée (2) à la chambre de mélange (15),
- un approvisionnement pour la substance comestible liquide également raccordé du côté d'entrée (2) à la chambre de mélange (15),
- un côté de sortie de la chambre de mélange (15) différant du côté d'entrée (2),
**caractérisée en ce que** l'alimentation en air (3) est une alimentation en air génératrice de tourbillon et le côté de sortie de la chambre de mélange (15) est délimité au moins partiellement par une partie de paroi souple (11) dans laquelle sont formées au moins une ouverture de passage et au moins une fente pour le mélange de substance comestible liquide et d'air.

2. Buse de pulvérisation selon la revendication 1, **caractérisée en ce que** l'alimentation en air génératrice de tourbillon (3) comprend au moins un canal à air (8) débouchant de manière tangentielle dans la chambre de mélange (15).

3. Buse de pulvérisation selon la revendication 1 ou 2, **caractérisée en ce que** la partie de paroi souple (11) comportant la ou les ouvertures de passage et la ou les fentes est séparable.

4. Buse de pulvérisation selon l'une quelconque des revendications 1 à 3, **caractérisée en ce que** la partie de paroi souple (11) est pourvue d'une ouverture de passage centrale, dont le centre coïncide avec l'axiale à travers la chambre de mélange (15).

5. Buse de pulvérisation selon l'une quelconque des revendications 1 à 4, **caractérisée en ce que** la partie de paroi souple (11) est pourvue d'une ouverture de passage centrale présentant une forme allongée.

6. Buse de pulvérisation selon l'une quelconque des revendications 1 à 5, **caractérisée en ce que** l'ouverture de passage dans la partie de paroi souple (11) est pourvue d'au moins une ouverture située à une certaine distance de l'axiale à travers la chambre de mélange (15).
